# EUROPEAN PATENT APPLICATION

(11) **EP 0 580 230 A1**
(43) Date of publication of application: **26.01.1994**
(21) Application number: 93202088.6
(22) Date of filing: 16.07.1993
(51) Int. Cl.: B65F 1/02, B09B 3/00

(54) **A method and a container for treating waste**

(30) Priority: 20.07.1992 NL 9201300
(71) Applicant: M. DEN OUDEN & Zn. B.V., NL-5481 XX Schijndel (NL)
(72) Inventor: den Ouden, Gijsbertus Cornelis Maria, NL-5481 XX Schijndel (NL); Coppens Johannes Theodorus, 5481 BB Schijndel (NL)
(74) Representative: Vollebregt, Cornelis Jacobus, Ir.

(57) **Abstract**

The invention relates to a method for treating waste from which substances or fibres constituting an environmental or health hazard may be released, in particular asbestos-containing waste. The waste is collected in sealed packagings in a container (1) which can be completely closed, said container being provided with a closable discharge opening (7). Through this discharge opening the waste collected in the container is discharged from the container at a dumping place under flexible sheeting (35) covering said dumping place, whilst simultaneously the packed waste inside the container as well as the sheeting are sprinkled with water. Furthermore the invention relates to a container for carrying out the above method, whereby at least one sprinkler pipe (12) is disposed in the completely closable container.

## Description

The invention relates to a method for treating waste from which substances or fibres constituting an environmental or health hazard may be released, in particular asbestos-containing waste.

For the removal and further transport on an industrial scale of waste constituting an environmental or health hazard, such as in particular asbestos-containing waste, specialized companies are used, which have special equipment at their disposal and which present this waste in completely packed condition to processing companies selected for that purpose.

Usually waste of this kind presented by private individuals is not packed in an efficient manner. Accordingly, in order not to endanger the health of the personnel working at the locations where the waste is presented, said personnel must be fully protected by means of masks completely covering the face, overalls, boots, gloves and breathing filters when taking delivery of the waste.

In order to prevent further risks the waste is indeed sprinkled during dumping, but this kind of sprinkling, which generally takes place only superficially, cannot sufficiently preclude hazardous substances or fibres from escaping.

After the work the personnel first have to be cleaned in special shower units before they can take off their protective clothing and the like. The shower water has to be purified via filters, which also have to be exchanged and carried off by specialized companies.

It will be apparent that all this involves high costs. Consequently, in order to keep down costs as much as possible, this type of hazardous waste is generally only accepted at certain points of time, which implies, however, that the individuals or companies presenting the waste will usually have to store the waste for some time, which also involves certain risks.

The object of the invention is to obtain a method of the above kind, wherein the drawbacks of the method used so far can be avoided.

According to the invention this can be achieved in that the waste is collected in sealed packagings in a container which can be completely closed, said container being provided with a closable discharge opening, through which the waste collected in the container is discharged from the container at a dumping place under flexible sheeting covering said dumping place, whilst simultaneously the packed waste inside the container as well as the sheeting, whose width is larger than that of the discharge opening of the container, is sprinkled with water.

By using the method according to the invention the adequately packed waste can be placed in the container at all times, without unacceptable risks being involved for individuals present in the area around the container.

Since the container can be closed completely, there will be no risk of any substances or fibres escaping from the waste and ending up in the environment, for example as a result of weather conditions or the like, during the time that the waste is stored inside the container.

When the waste is being dumped it is possible to obtain an effective moistening of the waste in the container already, because the waste is sprinkled with water inside the container. By discharging the waste from the container under sheeting covering the dumping place, which sheeting is likewise sprinkled with water, the risk of hazardous substances or fibres escaping is practically precluded. Also after dumping has taken place the sheeting will provide an adequate covering of the dumped waste, so that, also when for example the dumped waste is afterwards covered with earth, there need not be any risk of hazardous substances or fibres escaping.

A further aspect of the invention relates to a container for treating waste from which substances or fibres constituting an environmental or health hazard may be released, in particular asbestos-containing waste.

According to the invention at least one sprinkler pipe is disposed in the completely closable container, which sprinkler pipe may be connected outside the container to a source of water under pressure.

By using the construction according to the invention it is possible, while using a container of simple construction, to sprinkle the waste with water before and/or during the discharging of the waste from the container, as a result of which hazardous substances and/or fibres can be prevented from escaping.

The invention will be explained in more detail hereafter with reference to a possible embodiment of a container according to the invention diagrammatically illustrated in the accompanying Figures.

Figure 1 is a perspective view of a container, to the rear side of which a roll of sheeting is detachably provided, whereby parts have been left out in order to show parts located therebehind.

Figure 2 is a side view of the container shown in Figure 1.

Figure 3 is a plan view of Figure 2.

Figure 4 is an elevational view of the front side of the container, seen according to the arrow IV in Figure 2.

Figure 5 is a rear view of the container, seen in the direction according to the arrow V in Figure 2.

Figure 6 is an enlarged elevational view of a part of a sprinkler pipe.

Figure 7 is a sectional view of Figure 6.

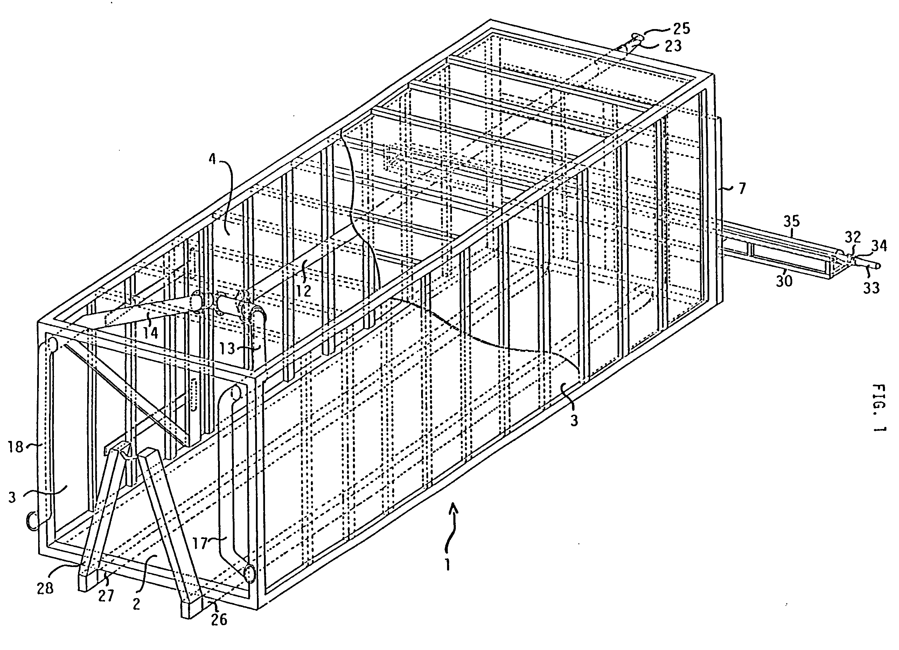

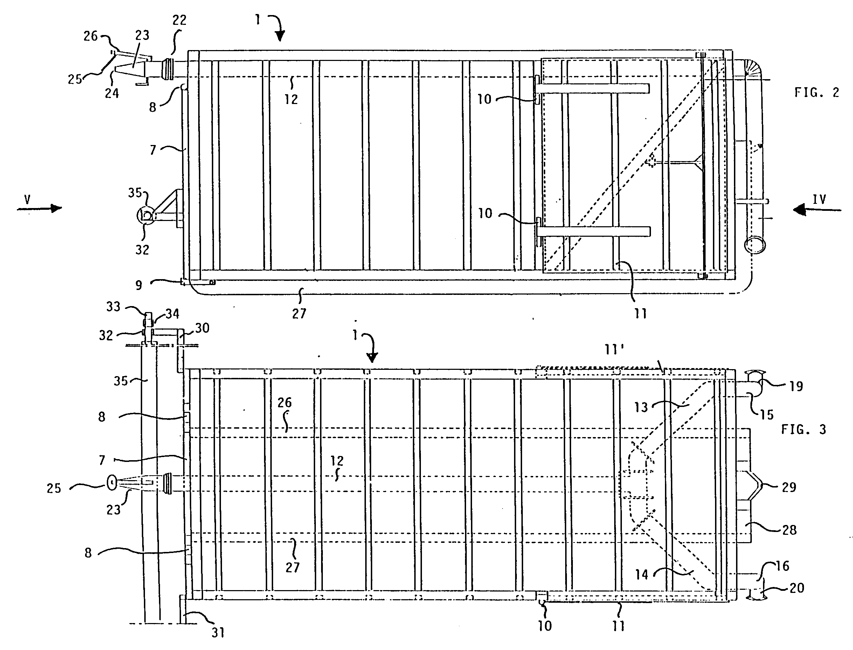

The container 1 shown in Figure 1 conventionally comprises a bottom 2, upright side walls 3, a roof 4, a front wall 5 and a rear wall 6, which is at least largely formed by a door 7 closing a discharge opening, which is pivotable with respect to the other part of the container 1 about horizontal pivot pins 8 located near the upper side of the door 7. The door 7 may be locked in the position closing the discharge opening by locking means known per se (only diagrammatically shown in Figure 2), which may be operated by remote control.

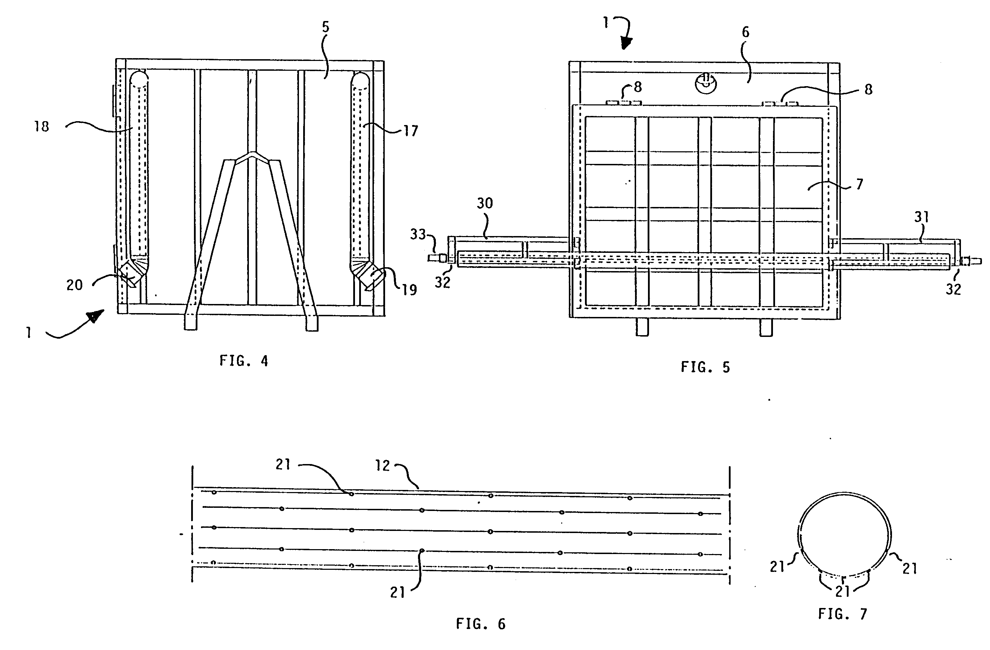

As is furthermore shown in Figures 2 and 3 a lockable door 11, which is pivotable about vertical pivot pins 10, is provided in a side wall.

As is furthermore illustrated in dotted lines in Figure 3 a similar door 11' may be provided in the other side wall, if desired.

A sprinkler pipe 12, which extends at least along the greater part of the container, parallel to the longitudinal direction of the container, is provided in the interior of the container, said sprinkler pipe projecting beyond the container through the rear wall 6 of the container with one end.

Near the front side of the container the pipe 12 divides into two pipes 13 and 14, which extend from the end of the sprinkler pipe 12 towards the corners of the container located near the front wall 5, connecting to lengths of pipe 15 and 16 extending through the front wall 5 of the container near the upper side of the container, said lengths of pipe via pipe bends blending into downwardly extending pipes 17 and 18.

The ends 19 and 20 of the pipes 17 and 18 are bent in a direction away from each other, at an angle of ± 45° with the horizontal, towards the outer sides of the container.

The ends 19 and 20 are suitably adapted for a water supply pipe to be connected thereto or for a closing means (not shown) closing the respective ends 19 and 20 to be connected thereto.

A large number of sprinkler openings 21 are provided in the bottom sides of the sprinkler pipe 12 as well as the pipe parts 13 and 14, as is shown in Figures 6 and 7.

The end of the pipe 12 projecting beyond the rear wall 6 is provided with a connecting means 22, to which a suitable closing means (not shown) closing the end of the pipe 12 may be connected.

As is shown in the Figures, however, a sprinkling nozzle 23 may also be connected to said closing means or be fixedly connected thereto. A plate 25 is positioned opposite the free open end 24 of said sprinkling nozzle, said plate being secured to said sprinkling nozzle 23 by means of a connecting bracket 26. The plate 25 includes an angle of ± 45° with the longitudinal axis of the sprinkler pipe 12 and with the longitudinal axis of the sprinkling nozzle 23 thereby.

The floor 2 of the container is conventionally supported by two frame beams 26 and 27 extending in the longitudinal direction of the container. An upwardly extending chock 28, to which a hook 29 is secured, joins the ends of said beams 26 and 27 projecting in front of the container.

All this is a conventional construction of containers, whereby the container may be coupled by means of said hook 29 to a pull-up installation mounted on a lorry or the like, so that the container can be pulled onto the chassis of a lorry or be moved off said chassis, as the case may be, as is generally known in the art.

In the art various systems are known for placing containers on the chassis of a lorry or removing them therefrom, and it will be apparent that the container may be equipped as desired with any similar known system.

As is furthermore shown in the Figures, elongated supports 30 and 31 may be detachably coupled to the sides of the door 7 closing the container at its rear side, in such a manner that said supports extend at least substantially horizontally and transversely to the longitudinal direction of the container.

At their ends remote from the container the supports 30 and 31 are provided with brackets 32, in which a horizontal shaft 33 can be supported so as to be freely rotatable about its central axis. Stop rings 34 provided on the shaft 33 thereby preventing the shaft 33 from moving in its axial direction.

A roll of sheeting material 35, for example so-called agricultural plastic sheeting, is wound on the shaft 33.

As is apparent especially from Figures 1 and 3, the width of the sheeting 35 is larger than the width of the container, in particular of the discharge opening of the container closed by the door 7.

With a container having a width of ± 2.40 m the width of the sheeting is preferably ± 4.25 m. A suitable thickness of the sheeting plastic material is ± 0.15 mm.

The above-described container will initially be disposed at a receiving depot without the support means 30 and 31 and the roll of sheeting 35, at which depot the hazardous waste, in particular asbestos-containing waste and the like may be presented appropriately packed in small, manageable packagings of for example a maximum admissible weight of ± 20 - 25 kgs. The waste presented may be introduced into the container through the door 11 (or 11') by those presenting it and be deposited therein.

A door (not shown) pivotable about a horizontal pivot pin may be provided in the roof 4, through which door certain goods, for example heavy and/or long objects, such as asbestos pipes, can be introduced into the container and be deposited therein using known hoisting devices.

The stacking height of the material will preferably not exceed the height of the discharge opening closed by the door 7, which will for example be ± 200 cm. Immediately after the waste has been introduced into the container the door 11 or 11' may be closed again. Of course the door 7 will also be closed during the time that the waste is being delivered and stored in the container. Also the ends 19 and 20 of the pipes 17 and 18 and the end of the pipe 12 projecting outside the container will be closed by suitable closing means.

After the container has been filled it may be pulled onto a lorry in a usual manner and be driven to a dumping place. At the dumping place the supports 30 and 31 will be secured to the closing door 7 and the roll of sheeting 35 will be placed in the supports.

Then a suitable length of sheeting will be rolled out on the ground surface on which the waste present inside the container is to be deposited. After the desired length of sheeting has been rolled out, the end of the sheeting remote from the container is fixed on the ground, for example by depositing material on said free end of the sheeting.

Furthermore, when the sprinkling nozzle 23 is not permanently mounted on the sprinkler pipe 12, the sprinkling nozzle 23 and the plate 25 secured thereto are coupled to the end of the sprinkler pipe 12 projecting beyond the rear side of the container, after the closing means closing said end has been removed. A hose may be connected to one of the ends 19 or 20, likewise after the closing means in question has been removed, said hose being in communication with a source for supplying water under pressure. Tankers commonly used in agriculture may be used as a suitable source, whereby the contents of a tank, for example water, may be put under pressure, so that said water can be forced into the pipes 13, 14 and 12 under pressure through the pipe 17 or 18.

In order to discharge the waste the container can be tilted in the usual manner, about a pivot axis extending transversely to the longitudinal direction of the container, with the aid of the lorry supporting the container, so that the floor of the container slopes down in the direction of the discharge opening which can be closed by the door 7. Possibly, in order to limit the discharging height, the container may be moved off the lorry supporting the container some distance parallel to the sloping container floor.

When the container is placed in a sloping position the door 7, after unlocking of the locking means 9, will automatically pivot about the pivot pins 8 to a position releasing the discharge opening.

Before discharging is started and during said discharging water under pressure may be supplied through the pipes 12, 13 and 14, so that this water will flow out through the passages 21 provided in the sprinkler pipes 12, 13 and 14 and thoroughly wet the waste present inside the container.

Furthermore water under pressure will squirt out through the mouth 24 of the nozzle 23 and impact with the plate 25 thereby. Said water squirting against the plate 25 is deflected downwards, forming a water screen sprinkling the upper side of the sheeting 35 rolled out over the dumping place. Said water sprinkled on the sheeting 35 prevents undesirable blowing up of the sheeting and at the same time effects an adequate moistening of the sheeting and the area around the sheeting. It will be apparent that the thoroughly moistened waste from the container is deposited under the sheeting 35 rolled out over the dumping place. Since the waste is adequately packed and is also thoroughly wetted when being discharged hazardous substances and/or fibres are practically precluded from escaping. However, since also the sheeting and the immediate surroundings of the sheeting are simultaneously thoroughly sprinkled during the discharging of the waste, the possibility of hazardous substances and/or fibres escaping may be considered practically non-existent.

After the contents of the container have been unloaded the part of the sheeting 35 covering the heap of waste may be cut off the roll supported by the container, in such a manner that also the end of the heap of deposited waste located near the container will be amply covered by the sheeting. Also at the sides a good covering of the heap of waste is obtained in that, as explained above, the width of the sheeting is considerably larger than that of the container.

If desired the heap of waste thus covered by means of the sheeting 35 may be covered by a further material, such as earth.

Then the roll of sheeting and the supports 30 and 31 supporting said roll of sheeting may be removed from the container again and the openings of the various pipes may be closed again, after which the container may be returned to the collecting place in order to be filled with waste again.

## Claims

1. A method for treating waste from which substances or fibres constituting an environmental or health hazard may be released, in particular asbestos-containing waste, characterized in that said waste is collected in sealed packagings in a container which can be completely closed, said container being provided with a closable discharge opening, through which the waste collected in the container is discharged from the container at a dumping place under flexible sheeting covering said dumping place, whilst simultaneously the packed waste inside the container as well as the sheeting, whose width is larger than that of the discharge opening of the container, is sprinkled with water.

2. A container for treating waste from which substances or fibres constituting an environmental or health hazard may be released, in particular asbestos-containing waste, characterized in that at least one sprinkler pipe is disposed in the completely closable container, which sprinkler pipe may be connected outside the container to a source of water under pressure.

3. A container according to claim 1, characterized in that said sprinkler pipe is disposed near the upper side of the container and is connected, by means of an at least substantially vertical pipe, to a connecting means located outside the container, near the bottom side of the container, for connecting a supply pipe thereto.

4. A container according to any one of the preceding claims, characterized in that said container is provided with a closable discharge opening and a sprinkler means located above said discharge opening, which can be connected to a source of water under pressure.

5. A container according to claim 4, characterized in that said sprinkler means is provided with a sprinkling nozzle and a plate provided at some distance from said sprinkling nozzle, said plate being arranged in such a manner that water flowing out of said sprinkling nozzle is spread in downward direction.

6. A container according to any one of the preceding claims, characterized in that said container is provided with means for supporting a roll of sheeting material near said discharge opening.

7. A container according to claim 6, characterized in that said container is combined with a roll of sheeting material having a width larger than that of said discharge opening.

8. A container according to claim 6 or 7, characterized in that said means for supporting said roll of sheeting material are detachably connected to the door closing said discharge opening.

9. A container according to any one of the claims 4 - 8, characterized in that said discharge opening can be closed by means of a door, which is pivotable about a substantially horizontal pivot pin located near the upper side of the door.

10. A container according to any one of the claims 2 - 9, characterized in that a door, which is pivotable about a substantially vertically extending pivot pin, is provided in a side wall of said container.

11. A container according to any one of the claims 2 - 10, characterized in that a door, which is pivotable about a substantially horizontally extending pivot pin, is provided in the roof of said container.

12. A container according to claim 11, characterized in that said pivot pin is positioned near one side of said container.
